# EUROPEAN PATENT SPECIFICATION

(11) **EP 3 353 846 B1**
(45) Date of publication and mention of the grant of the patent: **20.07.2022**
(21) Application number: 16849202.3
(22) Date of filing: 10.08.2016
(51) Int. Cl.: H01M 10/42, H01M 10/48, H01M 10/04, H01M 10/0565, H01M 10/0562, H01M 50/202, H01M 50/233, H01M 50/247, H01M 50/284, H01M 50/10, H01M 50/543

(54) **SMART BATTERY WITH INTEGRATED SENSING AND ELECTRONICS**
INTELLIGENTE BATTERIE MIT INTEGRIERTER ERFASSUNG UND ELEKTRONIK
BATTERIE INTELLIGENTE À DÉTECTION ET ÉLECTRONIQUE INTÉGRÉES

(30) Priority: 25.09.2015 US 201514866286
(43) Date of publication of application: 01.08.2018
(73) Proprietor: Intel Corporation, Santa Clara, CA 95054 (US)
(72) Inventor: CANFIELD, Dwayne E., Portland, Oregon 97229 (US); IYER, Ravishankar, Portland, Oregon 97229 (US); KEATES, Andrew W., Los Gatos, California 95054 (US); PEEK, Gregory A., Northplains, Oregon 97133 (US); PONTARELLI, Mark C., Lake Oswego, Oregon 97035 (US)
(74) Representative: HGF
(86) International application number: PCT/US2016/046261
(87) International publication number: WO 2017/052826

(56) References cited:
- CN-A- 102 479 985
- US-A- 5 246 790
- US-A- 5 572 110
- US-A- 5 572 110
- US-A1- 2005 019 663
- US-A1- 2006 244 315
- US-A1- 2011 300 413
- US-A1- 2011 300 413
- US-A1- 2014 152 448
- US-A1- 2014 181 551
- US-A1- 2015 072 180

## Description

### Technical Field

This disclosure relates generally to batteries, and more particularly to batteries with integrated electronics.

### Background

Electronic devices, including mobile platforms such as smartphones, laptops, notebook computers, and tablet computers, continue to shrink in size. A power delivery system, including one or more battery cells, is often among the largest components of a portable electronic device. As portable electronic devices shrink in size, users also expect that power delivery systems will grow smaller and more portable. Integration of batteries into physically small systems, and particularly thin systems, presents a challenge when plugs, sockets, and even tabs are used to connect batteries to the systems. US2014/0152448 describes an augmented battery for a device that provides augmented capabilities not present in the device when using conventional batteries. US2011/0300413A1 described a combined battery and wireless-communications apparatus and method.

### Brief Description of the Drawings

Arrangements and embodiments may be described in detail with reference to the following drawings, in which like reference numerals refer to like elements and wherein:
FIG. 1 is a block diagram illustrating a smart battery.
FIG. 2 schematically illustrates an example battery with embedded electronics in a standard form factor.
FIGS. 3A and 3B are block diagrams illustrating a system including a plurality of smart batteries.
FIGS. 4A, 4B, and 4C illustrate a modular phone.
FIG. 5 is a perspective view of a battery cell including solid electrolytes.
FIG. 6 is a side view of a circuit board assembly.
FIGS. 7A, 7B, 7C, and 7D illustrate a mobile electronic device including an integrated solid electrolyte battery.
FIG. 8 is a cross-sectional side view of a circuit board including an integrated battery cell.
FIG. 9 is a cross-sectional side view of a battery cell.
FIG. 10 is a flow chart of a method for manufacturing a circuit board.
FIG. 11 is a flow chart of a method for manufacturing a circuit board.

### Detailed Description

The practice of designing an electronic device and then attempting to fit a battery into the device often leads to sub-optimal use of the volume of the device. However, a longer run-time may be achieved if the battery were to occupy a greater proportion of the device volume. Accordingly, certain arrangements disclosed herein design the battery to be the device and integrate the electronics into the battery. For example, sensors and/or other electronics may be integrated into a battery having a standard form factor (AA, AAA, AAAA, C, D, 9 Volt, a button cell or coin-shaped battery, or other existing or new standard form factors). The ability to include processing or computing circuitry as an integral element of batteries allows for "smart batteries" or "smart battery platforms" wherein additional intelligent capabilities (e.g., sensing, recognizing, processing, communicating, controlling, etc.) can be automatically introduced to existing devices that use the smart batteries.

The invention is defined by the features of claim 1.

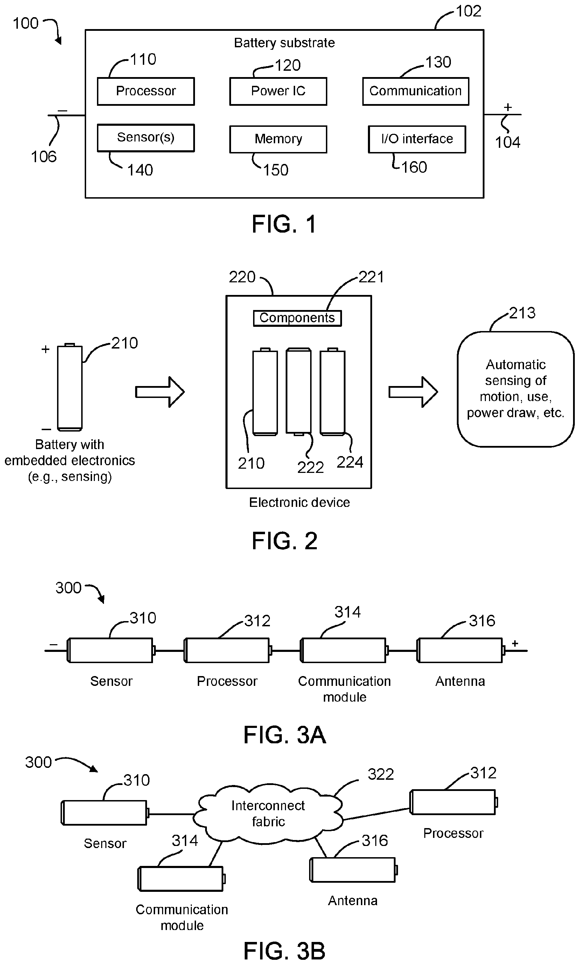

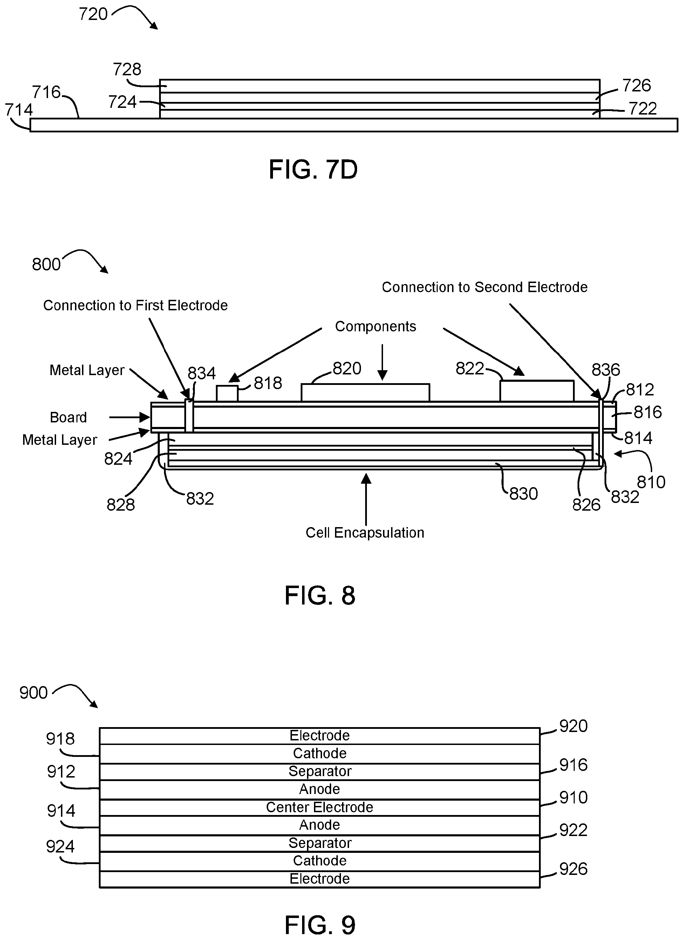

FIG. 1 is a block diagram illustrating a smart battery 100 according to the invention. The smart battery 100 includes a battery cell integrated into a substrate 102 (also referred to herein as the "battery substrate 102"). As discussed in detailed examples below (see, e.g., FIG. 8), the battery substrate 102 includes a solid-polymer electrolyte battery that is an integrated part of a base substrate (e.g., a printed circuit board (PCB)) on which electronics can be integrated. The battery substrate 102 is configured to provide power at a positive (+) terminal 104 and a negative (-) terminal 106 of the smart battery 100. In certain embodiments, the solid electrolyte battery cells disclosed herein are rechargeable.

In the example shown in FIG. 1, the electronics include a processor 110, a power integrated circuit (IC) 120, a communication circuit 130, one or more sensors 140, a memory device 150, and an input/output (I/O) interface 160. Persons skilled in the art will recognize from the disclosure herein that other embodiments may include other electronics, more electronic devices, or fewer electronic devices integrated with the battery substrate 1 02, provided the electronic devices comprise sensing circuitry to generate sensor data; and communication circuitry to provide the sensor data external to the package, as is defined in claim 1.

The processor 110 may include, for example, a computing device, microprocessor, controller, programmable logic controller ("PLC") for implementing a control program, and/or other processing circuitry. The processor 110 may be configured to execute instructions (e.g., stored in the memory device 150) to perform functions described herein. The power IC 120 is configured to manage power requirements for the electronics integrated on the battery substrate 102 and/or for a host electronic device (not shown in FIG. 1) that receives at least part of its power from the smart battery 100 through the terminals 104, 106. The power IC 120 may provide, for example, direct current (DC) to DC conversion, battery charging functions, dynamic voltage scaling, power sequencing, and/or other power functions. In certain embodiments, for example, the processor 110 and the power IC 120 may cooperate to power on or off the host device and/or to selectively place the host device into a reduced power state. Such power decisions by the processor 110 and/or the power IC 120 may be based on, for example, input from the one or more sensors 140.

The communication circuit 130 is configured to communicate with, for example, other smart batteries electrically coupled in series or parallel with the smart battery 100, the host device, and/or an external communication device (not shown). In certain embodiments, the communication circuit 130 is configured to communicate data through the same terminals 104, 106 through which the smart battery 100 provides power. In other embodiments, the communication circuit 130 may communicate data through separate communication terminals (not shown). In yet other embodiments, the communication circuit 130 may communicate data wirelessly. The communication circuit 130 may include, for example, a universal serial bus (USB) interface, a mini USB interface, a micro USB interface, a serial bus interface, an infrared (IR) transceiver, a Bluetooth low energy (BLE) wireless module, a radio frequency identification (RFID) tag, or a radio configured for a communication standard such as the Institute of Electrical and Electronics Engineers (IEEE) 802.16 standard (which is commonly known to industry groups as worldwide interoperability for microwave access (WiMAX)), or the IEEE 802.11 standard (which is commonly known to industry groups as Wireless Local Area Network (WLAN) or Wi-Fi). In addition, or in other embodiments, the communication device may use a wireless cellular standard such as the 3rd Generation Partnership Project (3GPP) long term evolution (LTE) wireless standard.

The one or more sensors 140 may include any type of sensor. For example, the one or more sensors 140 may include an accelerometer, a gyroscope, a global positioning system (GPS) receiver, a temperature sensor, a microphone, a charge-coupled device (CCD) image sensor, an electrical load sensor, a light sensor, and a pressure sensor. The processor 110 may cooperate with the one or more sensors 140 to determine a variety of different parameters that include, but are not limited to, motion, use, frequency of use, location, orientation, power consumption, exposure to moisture, vibration, temperature, humidity, atmospheric pressure, air quality, water quality, audio, radiation, visible light, and IR light.

The memory device 150 may be configured to store data generated by the one or more sensors 140. The memory device 150 may include any storage medium readable by the processor 110, including volatile and non-volatile memory and/or storage elements. The volatile and non-volatile memory and/or storage elements may be a random-access memory (RAM), an erasable programmable read-only memory (EPROM), a flash drive, an optical drive, a magnetic hard drive, or another medium for storing electronic data.

In certain embodiments, the I/O interface 160 may be used in addition to, or instead of, the communication device 130. The I/O interface 160 may be configured to receive input from a user. For example, the I/O interface 160 may include a simple switch or button configured to activate or deactivate a function of the smart battery 100 and/or the one or more sensors 140. In addition, or in other embodiments, the I/O interface 160 may be configured to provide indicia to a user. For example, the I/O interface 160 may include one or more light emitting diode (LED) to indicate an operational state of the processor 110 and/or the one or more sensors 140, a presence of available sensor data in the memory device 150, an available capacity of the memory device 150, and/or a charge status of the battery cell.

As indicated above, the smart battery 100 according to the invention is implemented in a standard form factor to allow it to be used in any existing electronic device that uses a standard battery. For example, the smart battery 100 may be packaged in a form factor defined by the International Electrotechnical Commission (IEC), the American National Standards Institute (ANSI), or other standards body. Example standard form factors include, but are not limited to AA, AAA, AAAA, C, D, 9 Volt, button cell or coin-shaped battery, or other existing or new standard form factors.

FIG. 2 schematically illustrates an example battery 210 with embedded electronics in a standard form factor. In this example, the form factor of the casing or package may be a AA or AAA battery configured for use in an electronic device 220. The battery 210 may include a layered or monolithic solution with electronics integrated within the form factor directly on the battery cell. The electronic device 220 may comprise any type of device with one or more components 221 that receive or consume power from one or more batteries having the same standard form factor as that of the battery 210. If the electronic device 220 is a toy car, for example, the one or more components 221 may include an electric motor and a wireless receiver for remote control operation. In this example, the battery 210 with embedded electronics (e.g., sensing) is configured to provide automatic sensing 213 of parameters such as motion, use, power draw, etc. of the toy car and/or the electric motor and wireless receiver.

By adding the battery 210 to the electronic device 220, a user may determine, for example, how often the electronic device 220 is used, whether it has been moved, its location or pathway through a series of locations, an amount of vibration experienced during use, or any other sensed parameter (including the many other example parameters provided herein). The battery 210 may be used during a design and testing phase of the electronic device 220, or by an end user who desires to add functionality to the electronic device 220. In the example shown in FIG. 2, the electronic device 220 uses three batteries 210, 222, 224 that may be connected in series or parallel. However, any number of batteries may be used. The battery 210 with embedded electronics may be used in combination with regular (e.g., AA or AAA) batteries 222, 224. In addition, or in other embodiments, two or all three of the illustrated batteries 210, 222, 224 may be smart batteries with integrated sensors and/or other electronic devices. In such embodiments, two or more of the batteries 210, 222, 224 may provide sensing or operate independent of one another.

In other embodiments, two or more of the batteries 210, 222, 224 may communicate with one another as building blocks of a sensing and/or processing system.

FIG. 3A and 3B are block diagrams illustrating a system 300 including a plurality of smart batteries 310, 312, 314, 316 according to one embodiment. In the example shown in FIG. 3A, the smart batteries 310, 312, 314, 316 are electrically connected in series. In other embodiments, the smart batteries 310, 312, 314, 316 may be electrically connected in parallel. In the example shown in FIG. 3B, the smart batteries 310, 312, 314, 316 communicate with one another through an interconnect fabric 322. The ability to communicate through the interconnect fabric 322 (e.g., through wired or wireless connections) allows for more intelligence and/or capability, according to certain embodiments, as compared to stand-alone batteries that just provide power. The smart batteries 310, 312, 314, 316 are each configured to provide a different function. For example, a first battery 310 may be configured as a sensor and may provide sensor data (e.g., through the respective battery terminals in FIG. 3A or and/or through the interconnect fabric in FIG. 3B) to a second battery 312 configured to process the sensor data. The type of sensor selected for the first battery 310 and the type of processor or processing functions selected for the second battery 312 depend on the desired functionality of the system 300.

The second battery 312 configured as the processor may, for example, process sensor data to determine one or more parameters associated with operation of the host device or a surrounding environment. The second battery 312 may also, in response to a determination that the one or more parameters are at or above a threshold level, trigger a function such as selection of a power mode, adjustment of the power provided to its battery terminals based on the power mode, communication of the power mode through the battery terminals to the other batteries 310, 314, 316, communication of a wireless message, activation of a light emitting diode, activation of a microphone, activation of a sensor (e.g., within the second battery 312), and/or transmission of a command through the battery terminals to the first battery 310 to activate or deactivate a sensor. Many other functions may also be triggered, depending on the particular application.

While either or both of the first battery 310 and the second battery 312 may include a communication device, in the example shown in FIG. 3 the second battery 312 is configured to provide (e.g., through the respective battery terminals in FIG. 3A or and/or through the interconnect fabric in FIG. 3B) the processed data to a third battery 314 configured as a communication module. The third battery 314 may provide wired or wireless communication with external systems or devices. In the example shown in FIG. 3, a fourth battery 316 is configured as an antenna to extend a range of wireless communication for the system 300.

Certain battery technologies, such as lithium-ion (Li-ion) batteries cannot be used as a substrate for sensors or other electronic components because they use a liquid electrolyte. The inventive battery uses battery cells including solid electrolytes, such as solid polymers or ceramics. Because battery cells using solid electrolytes are conformable to different shapes, it is not necessary in certain embodiments to be limited to traditional battery shapes or form factors (e.g., AA or AAA). Thus, the disclosed smart battery platform embodiments may be implemented in any form factor to be used with existing devices and/or new three-dimensional (3D) smart battery form factors may be created.

Because a flammable liquid electrolyte has been a cause of catastrophic failures of common Li-ion batteries, solid electrolyte cell batteries are also safer than liquid electrolyte cell batteries. Certain embodiments disclosed herein provide space savings, lower assembly costs, size reduction (e.g., in an X-Y plane), and/or height reduction (e.g., in a Z direction perpendicular to the X-Y plane). In addition, or in other embodiments, disclosed systems and methods may provide for direct integration of a battery in a system, removing much of the overhead of packaging and socket use.

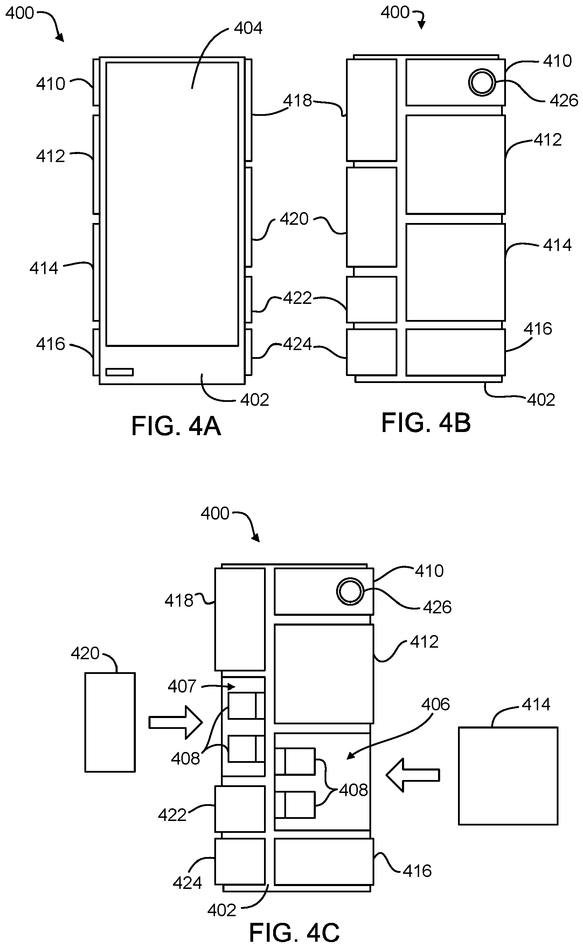

In certain embodiments, battery modules are provided for a modular system or device, and electronics are integrated with the battery modules to provide different, interchangeable functions for the modular system or modular mobile user device. For example, FIGS. 4A, 4B, and 4C illustrate a modular phone 400 according to one embodiment. FIG. 4A illustrates a front view of the modular phone 400 and FIGS. 4B and 4C illustrate a back view of the modular phone 400. As shown in FIG. 4A, the modular phone 400 includes a frame 402 comprising a display screen 404. The display screen 404 may include, for example, a liquid crystal display (LCD). As shown in FIG. 4C, the frame 402 includes slots 406, 407 that are configured to selectively couple to a respective module 410, 412, 414, 416, 418, 420, 422, 424. The modules 410, 412, 414, 416, 418, 420, 422, 424 may snap into and out of the slots 406, 407 or be magnetically held in place. The slots 406, 407 include one or more electrical connector 408 to electrically couple to its respective module 410, 412, 414, 416, 418, 420, 422, 424.

One or more of the modules 410, 412, 414, 416, 418, 420, 422, 424 comprises a battery with integrated circuitry to provide smart phone features to the modular phone 400. For example the module 410 may comprise a battery having an integrated digital camera (e.g., CCD image sensor) and a lens 426. The other modules 412, 414, 416, 418, 420, 422, 424 may provide other functionality such as a speaker, processor, memory, game controller, night vision sensor, pico projector, laser pointer, receipt printer, medical device, wireless local area network (WLAN) interface, wireless wide area network (WWAN) interface, or other function.

One of the modules 410, 412, 414, 416, 418, 420, 422, 424 may be configured simply as a battery to provide power for the entire modular phone 400. In other embodiments, two or more, or even each of the modules 410, 412, 414, 416, 418, 420, 422, 424 may comprise a battery with integrated circuitry. In such embodiments, each module 410, 412, 414, 416, 418, 420, 422, 424 may provide its own power or may contribute to the power of the overall modular phone 400. The functionality of one of the modules 410, 412, 414, 416, 418, 420, 422, 424, for example, may include controlling and optimizing the power provided by or to the other modules 410, 412, 414, 416, 418, 420, 422, 424. In addition, or in other embodiments, the frame 402 and/or display screen 404 may comprise an integrated battery and processing circuitry that maintains power so that any of the other modules may be hot-swapped during operation without losing power to the other modules. Examples of integrating a battery with a chassis, such as the frame 402, or with a substrate that may include circuitry associated with the display screen 404 are provided below.

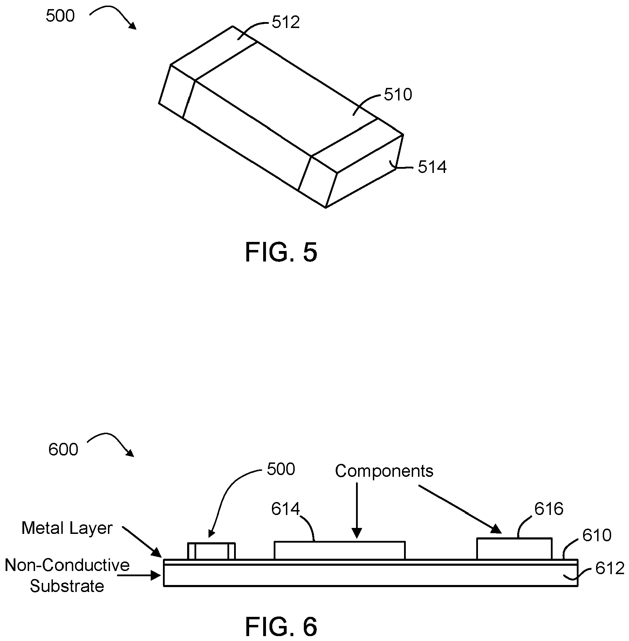

The inventive embodiments disclosed herein use solid electrolytes. For example, FIG. 5 is a perspective view of a battery cell 500 including solid electrolytes 510. The solid electrolytes 510 may include a solid electrolyte cathode material electrically coupled to a first electrode 512 and a solid electrolyte anode material electrically coupled to a second electrode 514. The solid electrolyte cathode material and the solid electrolyte anode material may each include, for example, a solid polymer or ceramic material. The solid electrolyte anode material may comprise, for example, graphite, silicon, or a blend of graphite and silicon. The solid electrolyte cathode material may comprise, for example, a lithium metal oxide, such as lithium cobalt oxide (LCO) or nickel cobalt aluminum (NCA). Such materials may be used for any of the anodes and/or cathodes disclosed herein (i.e., not just for the embodiment shown in FIG. 5). Further, a solid polymer separator or ceramic separator may separate the solid electrolyte cathode material from the solid electrolyte anode material, to prevent electrical short circuits and allow for the transport of ionic charge carriers during the passage of current in the battery cell 500. The first electrode 512 and the second electrode 514 are electrically conductive and include a material (e.g., copper, silver, or aluminum) that can be soldered to an electrically conductive trace on a printed circuit board or other substrate. In certain embodiments, a plastic or other laminate material may cover the solid electrolytes 510.

The battery cell 500 including the solid electrolytes 510 may be selectively sized, shaped, and configured for a particular surface mounting application. As shown in FIG. 5, the battery cell 500 may be rectangular, for example, to fit on a crowded circuit board. However, persons skilled in the art will recognize from the disclosure herein that the allsolid construction allows the battery cell 500 to have any rectangular or non-rectangular shape. Further, because there is no liquid that has to be contained by a hermetically sealed, rigid metal can, the height, width, and length of the battery cell 500 can be selected to meet electrical storage capacity and space needs. Further, cost is reduced by avoiding the canning and sealing process, and the battery cell 500 is safer than liquid electrolyte cells because the solid electrolytes 510 cannot leak or vent. The solid electrolytes 510 can also withstand extreme environmental conditions, such as the high temperatures associated with reflow soldering techniques.

FIG. 6 is a side view of a circuit board assembly 600. The circuit board assembly 600 includes a metal layer 610 over a non-conductive substrate 612. The metal layer 610 may include, for example, copper or other electrically conductive materials. Although not shown in FIG. 6, certain embodiments may include another metal layer below the non-conductive substrate 612 (e.g., used as a ground plane or power plane) connected to the top metal layer 610 through plated vias in the non-conductive substrate 612. The non-conductive substrate 612 may include, for example, fiberglass or non-conductive laminates .

During the manufacturing process, the metal layer 610 may be etched or otherwise formed to create a trace pattern for electrically connecting a plurality of circuit components 614, 616. The circuit components 614, 616 may include, for example, capacitors, resistors, transistors, and/or processors or other integrated circuits. As shown in FIG. 6, the battery cell 500 of FIG. 5 may be soldered onto the trace of the metal layer 610 along with the other circuit components 614, 616 of the circuit board assembly 600. Using automated processes (e.g., pick-and-place machines and/or reflow soldering) to populate the circuit board assembly 600 with the battery cell 500 along with the other components 614, 616 reduces manual labor and the overall cost of manufacturing the circuit board assembly 600.

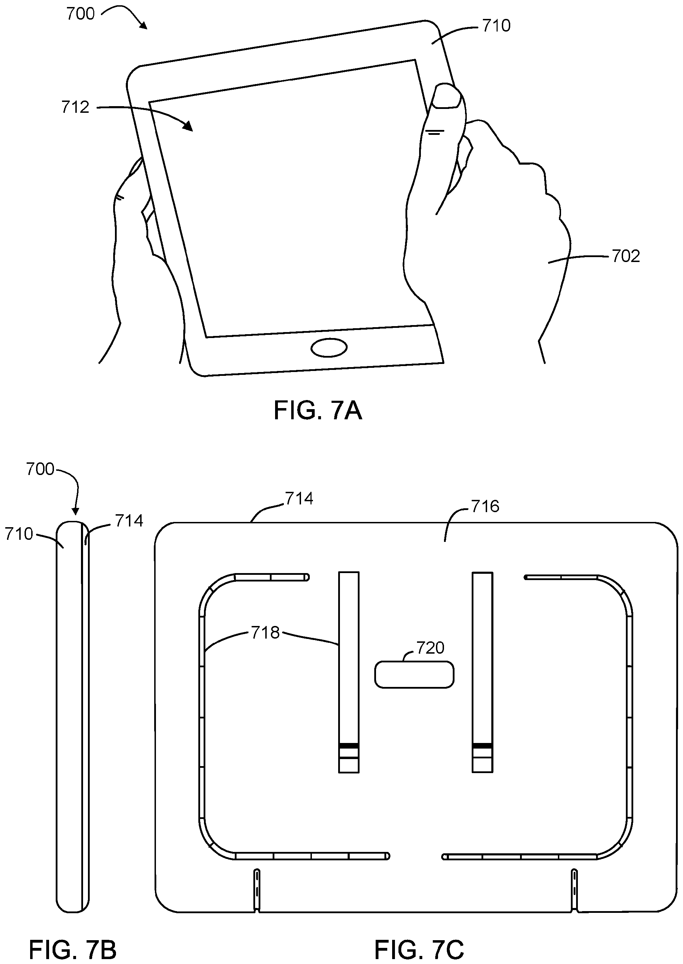

FIGS. 7A, 7B, 7C, and 7D illustrate a mobile electronic device 700 including an integrated solid electrolyte battery according to one embodiment. FIG. 7A shows a perspective view of the mobile electronic device 700 being handled by a user 702. In this example, the mobile electronic device 700 is a tablet computer. However, in other embodiments any mobile device may be used, such as a smartphone, a laptop computer, a notebook computer, a personal digital assistant (PDA), an audio and/or video player, a gaming device, a camera, a wearable device (e.g., an exercise or health monitor), or any other device using electrical power. As shown in FIG. 7A, the mobile electronic device 700 may include a chassis 710 for enclosing electronic circuitry and other components, and a display screen 712 to interface with the user 702. The display screen 712 may be a liquid crystal display (LCD) screen or other type of display screen, such as an organic light emitting diode (OLED) display. The display screen 712 can be configured as a touch screen. The touch screen may use capacitive, resistive, or another type of touch screen technology.

Those skilled in the art will also recognize from the disclosure herein that the mobile electronic device 700 may include a variety of additional components. For example, the mobile electronic device 700 may include one or more antennas configured to communicate with a transmission station, such as a base station (e.g., of a cellular network), a base band unit, a remote radio head, a remote radio equipment, a relay station, a radio equipment, or another type of wireless wide area network (WWAN) access point. As further examples, the mobile electronic device 700 may also include a microphone and one or more speakers that can be used for audio input and output from the mobile electronic device 700, an application processor (e.g., configured to perform the functions described herein), a graphics processor coupled to internal memory to provide processing and display capabilities, a non-volatile memory port to provide data input/output options to the user 702 and/or to expand the memory capabilities of the mobile electronic device 700, a keyboard (e.g., integrated with the mobile electronic device 700 or wirelessly connected to the mobile electronic device 700) to provide additional user input, and/or a virtual keyboard provided using the touch screen.

FIG. 7B illustrates a side view of the mobile electronic device 700. In this example, the chassis 710 of the mobile electronic device 700 includes a back plate 714. At least a portion of the back plate 714 is electrically conductive. For example, the back plate 714 may comprise aluminum. FIG. 7C illustrates an inside surface 716 of the back plate 714 (e.g., an internal surface of mobile electronic device 700 when assembled). The inside surface 716 may include structural elements 718 (e.g., strengthening ribs, walls, or guides) to provide structural support to the chassis 710. However, as shown in FIG. 7C, the inside surface 716 of the back plate 714 may include large portions of open or unobstructed space. Thus, in this example embodiment, an unobstructed portion of the inside surface 716 of the back plate 714 is used as an electrode of an integrated solid electrolyte battery 720.

FIG. 7D illustrates a side view of the back plate 714 with the integrated solid electrolyte battery 720. In this example, the portion of the inside surface 716 that forms part of the integrated solid electrolyte battery 720 is flat. In other embodiments, however, the portion of the inside surface 716 and the integrated solid electrolyte battery 720 may be curved. In certain such embodiments, layers of the integrated solid electrolyte battery 720 comprise flexible sheet material that conforms to the curvature of the inside surface 716 of the back plate 714.

In this example, a portion of the electrically conductive inside surface 716 of the back plate 714 forms a first electrode of the integrated solid electrolyte battery 720. For example, the back plate 714 may comprise the cathode current collector of the integrated solid electrolyte battery 720. In such an embodiment, the integrated solid electrolyte battery 720 includes a solid electrolyte cathode layer 722 over the portion of the inside surface 716 that forms the cathode current collector. The integrated solid electrolyte battery 720 further includes a separator layer 724 over the solid electrolyte cathode layer 722, a solid electrolyte anode layer 726 over the separator layer 724, and a second electrode 728 over the solid electrolyte anode layer 726.

In this example, the second electrode 728 is an anode current collector for the integrated solid electrolyte battery 720. In other embodiments, however, the layers of the integrated solid electrolyte battery 720 may be reversed such that the first electrode (i.e., the back plate 714) forms the anode current collector and the second electrode 728 forms the cathode current collector. One or more of the layers 722, 724, 726, 728 may be applied from a roll of material, printed, sprayed, or otherwise deposited to form the integrated solid electrolyte battery 720. Thus, the integrated solid electrolyte battery 720 is part of the chassis 710. The height, width, and/or length of the integrated solid electrolyte battery 720 may be adjusted to fit a selected portion of the back plate 714 and/or to adjust the energy storage capacity of the integrated solid electrolyte battery 720. Electrical connections to the first electrode (i.e., the back plate 714) and the second electrode 728 provide power to circuitry and components of the mobile electronic device 700. Although not shown in FIG. 7D, certain embodiments of the integrated solid electrolyte battery 720 further include an encapsulation layer at least partially or fully covering the layers 722, 724, 726, 728 to provide protection from the environment. The encapsulation layer may include, for example, a plastic material or sealing compound.

In addition to being integrated with a chassis of an electronic device, or in other embodiments, a battery cell may be integrated with other components of an electronic device. For example, FIG. 8 is a cross-sectional side view of a circuit board 800 including an integrated battery cell 810. The circuit board 800 in this example is double sided. In other words, the circuit board 800 includes a first metal layer 812 and a second metal layer 814 separated by non-conductive substrate 816. The first metal layer 812 and the second metal layer 814 may include, for example, copper or other electrically conductive materials. The non-conductive substrate 816 may include, for example, fiberglass or non-conductive laminates.

**As** discussed above, the first metal layer 812 may be etched or otherwise formed to create a trace pattern for electrically connecting a plurality of circuit components 818, 820, 822. The circuit components 818, 820, 822 may include, for example, capacitors, resistors, transistors, and/or processors or other integrated circuits. One or more plated vias may be used to connect circuit traces of the first metal layer 812 to the electrically conductive plane of the second metal layer 814.

In this example, the second metal layer 814 of the circuit board 800 is used as a first electrode of the battery cell 810. The battery cell 810 further includes a first solid electrolyte layer 824 underlying (i.e., adjacent to) the second metal layer 814, a separator layer 826 underlying the first solid electrolyte layer 824, a second solid electrolyte layer 828 underlying the separator layer 826, and a second electrode 830 underlying the second solid electrolyte layer 828. The first solid electrolyte layer 824 and the second solid electrolyte layer 828 may comprise a solid polymer or ceramic material. Further, the separator layer 826 may comprise a solid polymer or ceramic material configured to prevent electrical short circuits and allow for the transport of ionic charge carriers during the passage of current in the battery cell 810. The circuit board 800 may include a cell encapsulation layer 832 to isolate and/or protect the battery cell 810 (e.g., to keep moisture out). The encapsulation layer 832 may include a plastic material or sealing compound.

One or more of the layers 824, 826, 828, 830, 832 may be applied from a roll of material, printed, sprayed, or otherwise deposited to integrate the battery cell 810 with the circuit board 800. In one embodiment, for example, the second metal layer 814 is attached to a partially completed structure including foam layers within which the anode, cathode, and/or separator have already been deposited. The height, width, and/or length of the battery cell 810 may be adjusted to fit a selected portion of the second metal layer 814 and/or to adjust the energy storage capacity of the battery cell 810.

The circuit board 800 includes a first electrical connection 834 between at least a first circuit trace on the first metal layer 812 to the first electrode (i.e., the second metal layer 814), and a second electrical connection 836 between at least a second circuit trace on the first metal layer 812 and the second electrode 830. As shown in FIG. 8, the first electrical connection 834 and the second electrical connection 836 may pass through the non-conductive substrate 816 (such as plated vias). Note that although the second electrical connection 836 is shown passing through the second metal layer 814, the second electrical connection 836 is isolated from the second metal layer 814 so as to only provide an electrical connection from one or more traces on the first metal layer 812 to the second electrode 830. In other embodiments, one or both of the first electrical connection 834 and the second electrical connection 836 pass around the edges of the non-conductive substrate 816 of the circuit board 800. Other configurations may be used in other embodiments. For example, the cell in other embodiments may be symmetrical, with a center electrode and connections to top and bottom current collectors (see FIG. 9).

In one embodiment, the second metal layer 814 is configured as a negative battery terminal or anode current collector of the battery cell 810. In such embodiments, the first solid electrolyte layer 824 comprises a solid electrolyte anode material, the second solid electrolyte layer 828 comprises a solid electrolyte cathode material, and the second electrode 830 is configured as a positive battery terminal or cathode current collector of the battery cell 810.

In another embodiment, the second metal layer 814 is configured as a positive battery terminal or cathode current collector of the battery cell 810. In such embodiments, the first solid electrolyte layer 824 comprises a solid electrolyte cathode material, the second solid electrolyte layer 828 comprises a solid electrolyte anode material, and the second electrode 830 is configured as a negative battery terminal or anode current collector of the battery cell 810.

**The** battery cell 810 shown in FIG. 8 may be integrated with the circuit board 800 during the manufacturing process. In other words, certain embodiments provide a device including the circuit board 800 (e.g., the first metal layer 812, the non-conductive substrate 816, and the second metal layer 814) with the battery cell 810 integrated thereon. A user may then etch or otherwise form circuit traces in the first metal layer 812 and attach the circuit components 818, 820, 822 thereto (e.g., using automated techniques such as pick-and-place machines and/or reflow soldering). The solid polymer or ceramic material of the first solid electrolyte layer 824 and the second solid electrolyte layer 828 are configured to withstand the high temperatures and other harsh conditions of forming the circuit traces and attaching the circuit components 818, 820, 822 thereto. Further, the integrated battery cell 810 increases safety during use and reduces manual labor and overall cost, as compared to using cells with liquid electrolytes.

FIG. 9 is a cross-sectional side view of a battery cell 900. In this example, the battery cell 900 is symmetrical with a center electrode 910, a first solid electrolyte anode 912 above the center electrode 910, and a second solid electrolyte anode 914 below the center electrode 910. Accordingly, in this example, the center electrode 910 comprises an anode current collector. Those skilled in the art will recognize from the disclosure herein that in other embodiments, the center electrode 910 may be a cathode current collector.

Above the first solid electrolyte anode 912 is a first separator 916, a first solid electrolyte cathode 918, and a top electrode 920. Similarly, below the second solid electrolyte anode 914 is a second separator 922, a second solid electrolyte cathode 924, and a bottom electrode 926. Thus, in this example, the top electrode 920 and the bottom electrode 926 are symmetric cathode current collectors.

One or more of the center electrode 910, top electrode 920, and bottom electrode 926 may be integrated with an electronic device. For example, the center electrode 910, or one of the top electrode 920 or bottom electrode 926, may comprise the back plate 714 shown in FIGS. 7B, 7C, and 7D. When the center electrode 910 comprises the back plate 714, the battery cell 900 may be formed on both sides of the back plate 714. As another example, the top electrode 920 may comprise the second metal layer 814 of the circuit board 800 shown in FIG. 8. In such an embodiment, the bottom electrode 926 may be coupled to or integrated with a second electronic device (e.g., a second circuit board).

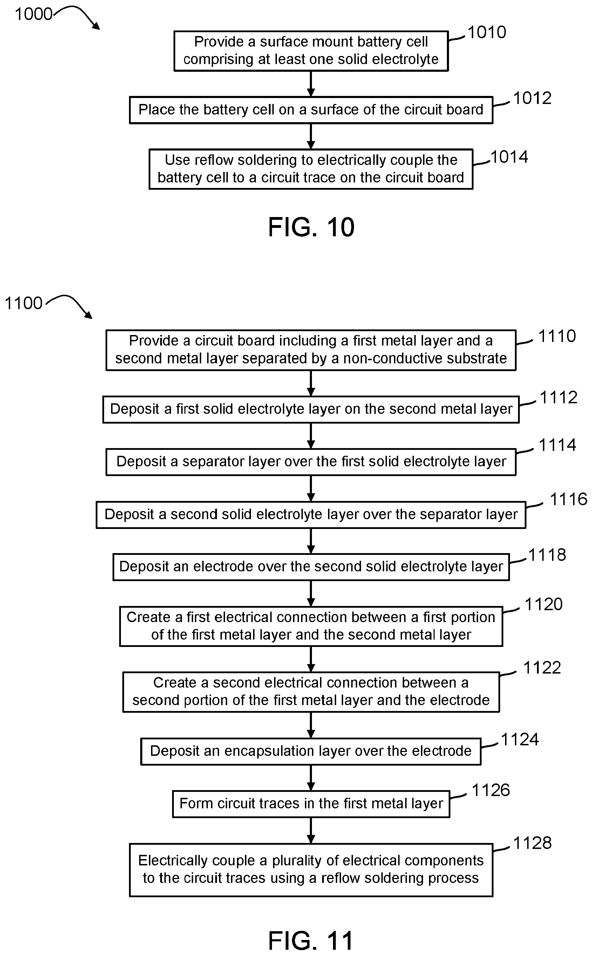

FIG. 10 is a flow chart of a method 1000 for manufacturing a circuit board. The method 1000 includes providing 1010 a surface mount battery cell comprising at least one solid electrolyte, placing 1012 the battery cell on a surface of the circuit board, and using 1014 a reflow soldering process to electrically couple the battery cell to a circuit trace on the circuit board.

FIG. 11 is a flow chart of a method 1100 for manufacturing a circuit board. The method 1100 includes providing 1110 a circuit board including a first metal layer and a second metal layer separated by a non-conductive substrate, depositing 1112 a first solid electrolyte layer on the second metal layer, depositing 1114 a separator layer over the first solid electrolyte layer, depositing 1116 a
second solid electrolyte layer over the separator layer, and depositing 1118 an electrode over the second solid electrolyte layer. The method 1100 further includes creating 1120 a first electrical connection between a first portion of the first metal layer and the second metal layer, and creating 1122 a second electrical connection between a second portion of the first metal layer and the electrode. In certain embodiments, the method 1100 may also include depositing 1124 an encapsulation layer over the electrode. In addition, or in other embodiments, the method 1100 may include forming 1126 circuit traces in the first metal layer, and electrically coupling 1128 a plurality of electrical components to the circuit traces using a reflow soldering process.

The term "coupled" may be used herein to refer to any type of relationship, direct or indirect, between the components in question, and may apply to electrical, mechanical, fluid, optical, electromagnetic, electromechanical, or other connections. In addition, the terms "first", "second", etc. might be used herein only to facilitate discussion, and carry no particular temporal or chronological significance unless otherwise indicated.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Various embodiments may be implemented using hardware elements, software elements, and/or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Although embodiments have been described with reference to a number of illustrative embodiments thereof, the scope of the present invention should, therefore, be determined only by the following claims.

## Claims

1. A battery comprising:
a substrate;
an integrated solid-polymer electrolyte battery cell, including an anode and a cathode, forming a part of the substrate;
one or more electrical devices integrated on or within the substrate and configured to receive power from the anode and cathode; and
a package containing the substrate and the one or more electrical devices, the package comprising a first battery terminal electrically coupled to the anode and a second battery terminal electrically coupled to the cathode,
wherein the one or more electrical devices comprise:
sensing circuitry to generate sensor data, and
communication circuitry to provide the sensor data external to the package; and
wherein the package is sized and configured to conform to a standard form factor for replaceable batteries.

2. The battery of claim 1, wherein the one or more electrical devices further comprise processing circuitry to process the sensor data.

3. The battery of claim 2, wherein the processing circuitry is configured to control power provided by the first battery terminal and the second battery terminal based on the processed sensor data.

4. The battery of any of claims 1-3, wherein the communication circuitry is configured to communicate the sensor data through at least one of the first battery terminal and the second battery terminal, and wherein the communication circuitry is further configured to receive signals through at least one of the first battery terminal and the second battery terminal.

5. The battery of any of claims 1-4, further comprising at least one electrical terminal separate from the first battery terminal and the second battery terminal, wherein the communication circuitry is configured to communicate the sensor data through the at least one electrical terminal.

6. The battery of any of claims 1-5, wherein the communication circuitry is configured to wirelessly transmit the sensor data.

7. The battery of any of claims 1-6, wherein the sensing circuitry includes one or more sensors selected from a group comprising an accelerometer, a gyroscope, a global positioning system receiver, a temperature sensor, a microphone, an image sensor, an electrical load sensor, a light sensor, and a pressure sensor.

## Patentansprüche

1. Batterie, umfassend:
ein Substrat;
eine integrierte Festpolymerelektrolyt-Batteriezelle, die eine Anode und eine Kathode umfasst und einen Teil des Substrats bildet;
ein oder mehrere elektrische Bauelemente, die auf dem oder innerhalb des Substrats integriert und zum Empfangen von Leistung von der Anode und der Kathode ausgelegt sind; und
ein Package, welches das Substrat und das eine oder die mehreren elektrischen Bauelemente enthält, wobei das Package einen ersten Batterieanschluss, der mit der Anode elektrisch gekoppelt ist, und einen zweiten Batterieanschluss umfasst, der mit der Kathode elektrisch gekoppelt ist,
wobei das eine oder die mehreren elektrischen Bauelemente umfassen:
eine Sensorschaltungsanordnung zum Erzeugen von Sensordaten, und
eine Kommunikationsschaltungsanordnung zum Bereitstellen der Sensordaten außerhalb des Packages; und
wobei das Package so bemessen und ausgelegt ist, dass es einem Standardformfaktor für austauschbare Batterien entspricht.

2. Batterie nach Anspruch 1, wobei das eine oder die mehreren elektrischen Bauelemente ferner eine Verarbeitungsschaltungsanordnung zum Verarbeiten der Sensordaten umfassen.

3. Batterie nach Anspruch 2, wobei die Verarbeitungsschaltungsanordnung so ausgelegt ist, dass sie Leistung, die durch den ersten Batterieanschluss und den zweiten Batterieanschluss bereitgestellt wird, basierend auf den verarbeiteten Sensordaten regelt.

4. Batterie nach einem der Ansprüche 1 bis 3, wobei die Kommunikationsschaltungsanordnung zum Kommunizieren der Sensordaten durch mindestens einen des ersten Batterieanschlusses und des zweiten Batterieanschlusses ausgelegt ist, und wobei die Kommunikationsschaltungsanordnung ferner zum Empfangen von Signalen durch mindestens einen des ersten Batterieanschlusses und des zweiten Batterieanschlusses ausgelegt ist.

5. Batterie nach einem der Ansprüche 1 bis 4, ferner umfassend mindestens einen elektrischen Anschluss getrennt vom ersten Batterieanschluss und dem zweiten Batterieanschluss, wobei die Kommunikationsschaltungsanordnung zum Kommunizieren der Sensordaten durch den mindestens einen elektrischen Anschluss ausgelegt ist.

6. Batterie nach einem der Ansprüche 1 bis 5, wobei die Kommunikationsschaltungsanordnung zum drahtlosen Senden der Sensordaten ausgelegt ist.

7. Batterie nach einem der Ansprüche 1 bis 6, wobei die Sensorschaltung einen oder mehrere Sensoren umfasst, die aus einer Gruppe ausgewählt sind, die einen Beschleunigungsmesser, ein Gyroskop, einen Empfänger eines globalen Positionsbestimmungssystems, einen Temperatursensor, ein Mikrofon, einen Bildsensor, einen elektrischen Lastsensor, einen Lichtsensor und einen Drucksensor umfasst.

## Revendications

1. Batterie comprenant :
un substrat ;
une cellule de batterie intégrée à électrolyte polymère solide, comprenant une anode et une cathode, formant une partie du substrat ;
un ou plusieurs dispositifs électriques intégrés sur ou dans le substrat et configurés pour recevoir de l'énergie de l'anode et de la cathode ; et
un conditionnement contenant le substrat et le ou les dispositifs électriques, le conditionnement comprenant une première borne de batterie couplée électriquement à l'anode et une seconde borne de batterie couplée électriquement à la cathode,
le ou les dispositifs électriques comprenant :
des circuits de détection pour générer des données de capteur, et
des circuits de communication pour fournir les données du capteur à l'extérieur du conditionnement ; et
le conditionnement étant dimensionné et configuré pour se conformer à un facteur de forme standard pour les batteries remplaçables.

2. Batterie selon la revendication 1, le ou les dispositifs électriques comprenant en outre des circuits de traitement pour traiter les données du capteur.

3. Batterie selon la revendication 2, les circuits de traitement étant configurés pour commander l'énergie fournie par la première borne de batterie et la seconde borne de batterie sur la base des données de capteur traitées.

4. Batterie selon l'une quelconque des revendications 1 à 3, les circuits de communication étant configurés pour communiquer les données de capteur par l'intermédiaire d'au moins l'une de la première borne de batterie et de la seconde borne de batterie, et les circuits de communication étant en outre configurés pour recevoir des signaux par l'intermédiaire d'au moins l'une de la première borne de batterie et de la seconde borne de batterie.

5. Batterie selon l'une quelconque des revendications 1 à 4, comprenant en outre au moins une borne électrique séparée de la première borne de batterie et de la seconde borne de batterie, les circuits de communication étant configurés pour communiquer les données du capteur par l'intermédiaire de l'au moins une borne électrique.

6. Batterie selon l'une quelconque des revendications 1 à 5, les circuits de communication étant configurés pour transmettre sans fil les données du capteur.

7. Batterie selon l'une quelconque des revendications 1 à 6, les circuits de détection comprenant un ou plusieurs capteurs sélectionnés dans un groupe comprenant un accéléromètre, un gyroscope, un récepteur de système de positionnement global, un capteur de température, un microphone, un capteur d'image, un capteur de charge électrique, un capteur de lumière et un capteur de pression.
